# FASCICULE DE BREVET EUROPEEN

(11) **EP 2 605 214 B1**
(45) Date de publication et mention de la délivrance du brevet: **07.01.2015**
(21) Numéro de dépôt: 12196000.9
(22) Date de dépôt: 07.12.2012
(51) Int. Cl.: G06T 7/00, H04N 13/04, H04N 9/31

(54) **Procédé de projection d'une image sur une surface de projection en relief**
Verfahren zur Projektion eines Bildes auf eine dreidimensionale Fläche
Method for projecting an image onto a three-dimensional surface

(30) Priorité: 16.12.2011 FR 1161798
(43) Date de publication de la demande: 19.06.2013
(73) Titulaire: Commissariat à l'Énergie Atomique et aux Énergies Alternatives, 75015 Paris (FR)
(72) Inventeur: Arrizabalaga, Gorka, 38250 Lans En Vercors (FR); Mainguet, Jean-François, 38100 Grenoble (FR)
(74) Mandataire: Colombo, Michel

(56) Documents cités:
- WO-A2-2010/102288
- RAMESH RASKAR ET AL: "Shader Lamps: Animating Real Objects with Image-Based Illumination", PROCEEDINGS OF THE EUROGRAPHICS WORKSHOP ON RENDERING, 25 juin 2001 (2001-06-25), pages 1-10, XP002265319,
- VERLINDEN J C ET AL: "Development of a flexible augmented prototyping system", JOURNAL OF WSCG UNIV., vol. 11, no. 3, 2003, page 8PP, XP002679727, WEST BOHEMIA CZECH REPUBLIC ISSN: 1213-6972
- MORISHIMA S ET AL: "Hypermask: talking head projected onto moving surface", PROCEEDINGS 2001 INTERNATIONAL CONFERENCE ON IMAGE PROCESSING, vol. 3, 7 octobre 2001 (2001-10-07), pages 947-950, XP010563508, ICIP 2001 - THESSALONIKI, GREECE DOI: 10.1109/ICIP.2001.958281 ISBN: 978-0-7803-6725-8
- PIPER B ET AL: "ILLUMINATING CLAY: A 3-D TANGIBLE INTERFACE FOR LANDSCAPE ANALYSIS", CHI 2002 CONFERENCE PROCEEDINGS. CONFERENCE ON HUMAN FACTORS IN COMPUTING SYSTEMS., 20 avril 2002 (2002-04-20), pages 355-362, XP001099426, MINNEAPOLIS, MN DOI: 10.1145/503376.503439 ISBN: 978-1-58113-453-7
- BENNETT E ET AL: "The Effect That Touching a Projection Augmented Model Has on Object-Presence", INFORMATION VISUALISATION, 2005. PROCEEDINGS. NINTH INTERNATIONAL CONF ERENCE ON, 6 juillet 2005 (2005-07-06), pages 790-795, XP010836417, LONDON, ENGLAND ISBN: 978-0-7695-2397-2
- FREDERIC DELAUNAY ET AL: "A study of a retro-projected robotic face and its effectiveness for gaze reading by humans", HUMAN-ROBOT INTERACTION (HRI), 2010 5TH ACM/IEEE INTERNATIONAL CONFERENCE ON, 2 mars 2010 (2010-03-02), pages 39-44, XP031661623, IEEE, PISCATAWAY, NJ, USA ISBN: 978-1-4244-4892-0
- HRVOJE BENKO, ANDREW D. WILSON, PATRICK BAUDISCH: "Precise Selection Techniques for Multi-Touch Screens", ACM, 22 avril 2006 (2006-04-22), pages 1263-1272, XP040037632, Montreal, Canada

## Description

L'invention concerne un procédé de réglage d'un système de projection d'une image sur une surface de projection en relief. L'invention a également pour objet un procédé d'affichage d'une image sur cette surface de projection en relief et un système d'affichage d'une image tridimensionnelle. Enfin, l'invention a également pour objet un support d'enregistrement d'informations pour la mise en oeuvre des procédés précédents.

Par surface de projection "en relief", on désigne ici une surface qui n'est pas comprise dans un plan. Une telle surface en relief présente donc des aspérités ou des creux dont la hauteur ou la profondeur par rapport à un plan médian est au moins supérieure à 5 mm et, typiquement, supérieure à 1 cm ou 5 cm. Le plan médian est le plan qui minimise la somme des hauteurs et profondeurs de tous les reliefs de la surface de projection. Typiquement, une telle surface de projection est bombée de manière à être principalement concave ou convexe. Cette surface de projection est portée par un écran tridimensionnel.

Par « tridimensionnel » on désigne un objet ou une surface pour laquelle, quel que soit le repère considéré, la position de chaque point de cet objet ou de cette surface est définie sans ambiguïté par trois coordonnées x, y et z le long de trois axes non coplanaires de ce repère, aucune de ces coordonnées n'étant une constante.

Les systèmes d'affichage d'une image sur une surface de projection en relief ont en particulier été développés pour permettre la réalisation rapide de prototype. Par exemple, un tel système est décrit dans l'article suivant :
J.C. Verlinden, A. de Smit, A.W.J. Peeters, M.H. Van Gelderen, «Developpement of flexible augmented prototyping systems», Delft University of technology.

Comme indiqué dans cet article, l'une des difficultés est qu'il est difficile de régler le système d'affichage pour que l'image projetée, qui est en deux dimensions, s'affiche correctement sur la surface en relief. Plus précisément, la difficulté vient du fait qu'il faut projeter très précisément l'image de manière à ce que les pixels de l'image en deux dimensions conçus pour éclairer un motif en relief particulier de l'écran tridimensionnel éclairent effectivement ce motif particulier et non pas une autre zone de l'écran tridimensionnel.

Différents procédés de réglage ont été développés. La plupart de ces procédés sont manuels et prennent donc du temps.

Le déposant a également envisagé un procédé de réglage automatique consistant à mesurer, à l'aide d'un instrument, la position de l'écran tridimensionnel par rapport au projecteur pour ensuite être capable de calculer la relation qui relie chaque pixel de l'image en deux dimensions à un relief de l'écran tridimensionnel. Ce procédé nécessite de connaître très précisément la position du projecteur par rapport à la position de l'instrument de mesure de la position de l'écran. Or, en pratique, il n'est pas simple de positionner assez précisément l'instrument de mesure par rapport au projecteur.

Par ailleurs, il est souhaitable de permettre à un utilisateur, d'une façon aussi simple que possible, de sélectionner un emplacement particulier de la surface de projection pour déclencher automatiquement, en réponse, une action.

De l'état de la technique est également connu de :
- Ramesh Raskar et al, « Shader Lamps : Animating Real Objects with Image-Based Illumination », Proceedings of the Eurographics Workshop on Rendering, 25 juin 2001, pages 1-10,
- Morishima S et Al, « Hypermask : Talking head projected onto moving surface », Proceedings 2001 International Conference On Image Processing, vol. 3, 7 octobre 2001, pages 947-950,
- PIPER B et Al, « Illuminating Clay : A 3-D Tangible Interface For Landscape Analysis », CHI 2002 Conference Proceedings. Conference on Human Factors in Computing Systems. 20 avril 2002, pages 355-362,
- WO2010/102288A2,
- Bennett E et Al, « The effect That Touching a Projection Augmented Model Has on Object-Presence », Information Visualisation, 2005. Proceedings, Ninth International Conference On, 6 Juillet 2005, pages 790-795,
- FREDERIC DELAUNAY et Al, « A study of a retro-projected robotic face and its effectiveness for gaze reading by humans », Human-Robot Interaction (HRI), 2010 5th ACM/IEEE International Conference On, 2 mars 2010, pages 39-44,
- HRVOJE BENKO, ANDREW D. WILSON, PATRICK BAUDISCH : « Precise Selection Techniques for multi-touch screens », ACM, 22 avril 2006, pages 1263-1272.

L'invention vise à remédier à au moins l'un de ces inconvénients. Elle a donc pour objet un procédé d'affichage conforme à la revendication 1.

Le procédé ci-dessus permet de régler automatiquement l'appareil de projection de manière à ce qu'ensuite les images projetées correspondent le plus parfaitement possible aux différents reliefs de la surface de projection.

De plus, le procédé ci-dessus ne nécessite pas de connaître la position de l'instrument de mesure de la distance entre les points virtuels et réels par rapport à la position du projecteur.

L'utilisation d'un écran tridimensionnel en matériau translucide évite que le faisceau du projecteur puisse être coupé par un spectateur.

L'utilisation de la même caméra que celle utilisée lors du réglage du système de projection, pour identifier la position d'un doigt en contact avec la face avant de l'écran tridimensionnel permet de rendre l'écran tactile tout en limitant le nombre d'équipements supplémentaires à ajouter.

Les modes de réalisation de ces procédés peuvent comporter une ou plusieurs des caractéristiques des revendications dépendantes de procédés.

Ces modes de réalisation du procédé d'affichage présentent en outre les avantages suivants :
- réitérer le réglage en permanence lors de la projection d'une image permet d'adapter automatiquement l'image projetée à un déplacement de l'écran tridimensionnel ;
- le positionnement des trous d'aspiration à l'emplacement des points virtuels de repère permet d'utiliser les aspérités nécessairement créées par le thermoformage comme points réels de repère.

L'invention a également pour objet un support d'enregistrement d'informations comportant des instructions pour l'exécution d'un procédé conforme à l'une quelconque des revendications précédentes, lorsque ces instructions sont exécutées par un calculateur électronique.

L'invention a également pour objet un système d'affichage d'une image tridimensionnelle conforme à la revendication 9.

Les modes de réalisation de ce système d'affichage peuvent comporter une ou plusieurs des caractéristiques des revendications dépendantes de système.

L'invention sera mieux comprise à la lecture de la description qui va suivre, donnée uniquement à titre d'exemple non limitatif et faite en se référant aux dessins sur lesquels :
- la figure 1 est une illustration schématique et en perspective d'un système d'affichage d'une image tridimensionnelle,
- la figure 2 est une illustration schématique et en coupe d'un écran tridimensionnel utilisé dans le système de la figure 1, et
- la figure 3 est un organigramme d'un procédé de fabrication, de réglage et d'utilisation du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail

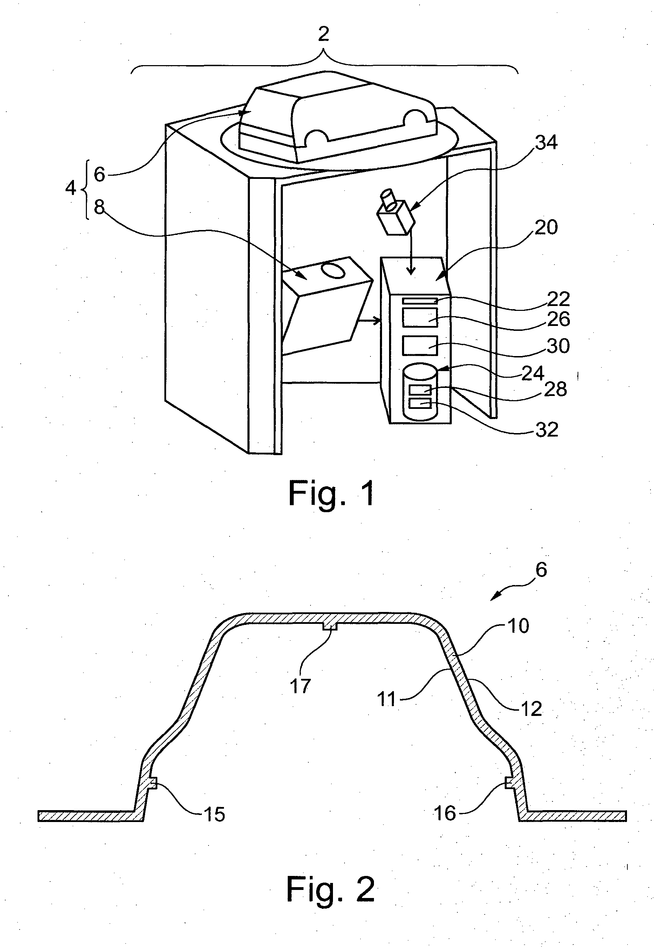

La figure 1 représente un système 2 d'affichage d'une image tridimensionnelle. Le système 2 comporte un appareil 4 de projection d'image tridimensionnelle. Ici, cet appareil 4 est un rétroprojecteur. Cet appareil 4 comprend notamment un écran tridimensionnel 6 ainsi qu'un projecteur 8 d'images bidimensionnelle. Une image bidimensionnelle est une image dans laquelle la position de chaque pixel est définie par uniquement un couple de x, y de coordonnées.

L'écran 6 est représenté plus en détail sur la figure 2. L'écran 6 est formé d'une paroi translucide 10 présentant une face intérieure 11 et une face extérieure 12.

La face intérieure 11 forme la surface de projection en relief sur laquelle les images sont directement projetées.

Typiquement, la paroi 10 est réalisée dans un matériau rigide ayant, par exemple, un module de Young supérieur à 1 GPa. Par exemple, le matériau est un matériau tel qu'un polymère, du verre ou autre. Ici, ce matériau est un plastique thermoformable tel que du PMMA (polyméthacrylate de méthyle) ou du polycarbonate.

L'épaisseur de la paroi 10 est typiquement supérieure à 0,5 mm ou 1 mm ou 10 mm.

Dans ce mode de réalisation, la paroi 10 est concave. Ici, la face extérieure 12 délimite le contour en trois dimensions d'un véhicule automobile.

Des points réels de repère 15 à 17 sont fixés sans aucun degré de liberté à la paroi 10. Ces points 15 à 17 sont des singularités de la paroi facilement localisable et identifiable par un instrument de mesure approprié tel qu'une caméra couplée à un logiciel de reconnaissance de forme. Ici, ces points 15 à 17 sont des aspérités ou des creux dont la hauteur ou la profondeur est supérieur à 0,5mm ou 1mm et, de préférence, supérieur à 2 ou 5mm. Dans ce mode de réalisation, ces points 15 à 17 ne forment qu'un seul bloc de matière avec la paroi 10. Plus précisément, ici, les points 15 à 17 sont des aspérités formées sur la face intérieure 11 de la paroi 10 par des trous d'aspiration d'un moule positif de thermoformage de cette paroi.

L'écran 6 comporte au moins quatre et de préférence plus de dix points réels de repère. Par exemple, de préférence, l'écran 6 comporte au moins trois points réels de repère par face essentiellement plane de la surface de projection. Sur la figure 2, seuls trois de ces points réels de repère ont été représentés.

Le projecteur 8 est un projecteur commandable d'images sur la surface de projection. Ici, ce projecteur est placé du côté de la face intérieure 11 de l'écran 6. Sa position est fixe et connue par rapport à l'écran 6. De plus, certains de ces paramètres tels que la direction de sa ligne de visée, son champ de projection, sont ici considérés comme ayant été préalablement ajustés pour projeter une image sur l'ensemble de la surface de projection. Ici, ces paramètres préalablement ajustés sont des constantes non modifiables.

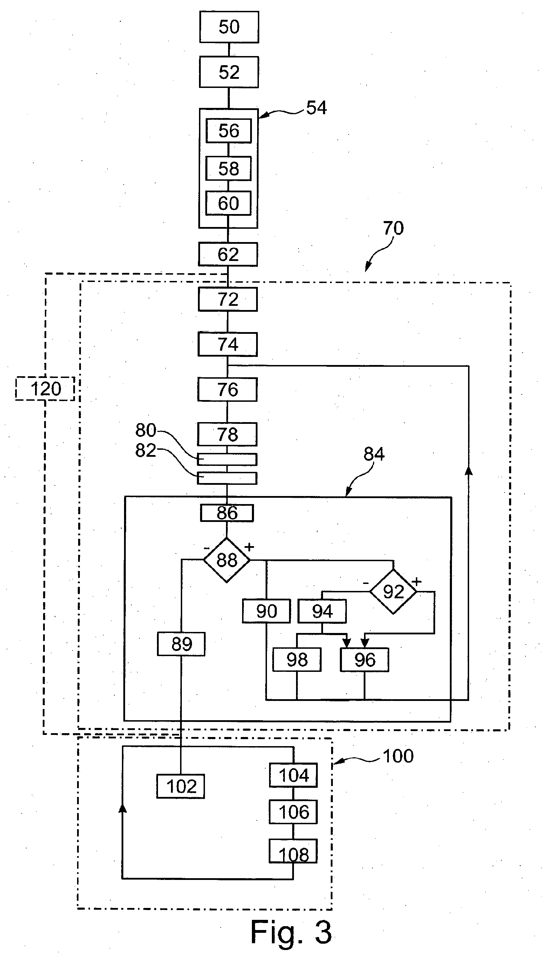

Le système 2 comprend aussi un calculateur électronique 20 programmé pour exécuter le procédé de la figure 3. Par exemple, le calculateur 20 est une unité centrale d'un ordinateur. Ce calculateur 20 comporte notamment un microprocesseur programmable 22 apte à exécuter des instructions enregistrées sur un support d'enregistrement d'informations. A cet effet, le calculateur 20 comporte également une mémoire 24 contenant les instructions nécessaires pour exécuter le procédé de la figure 3.

Dans ce mode de réalisation, le calculateur 20 implémente notamment un module 26 de construction d'images bidimensionnelle à projeter par le projecteur 8 sur l'écran 6. Le module 26 construit les images bidimensionnelles à partir d'un modèle informatique de la surface de projection. L'image construite est fonction :
- des paramètres constants comme ici, la direction de la ligne de visée et le champ de projection du projecteur 8, et
- de paramètres réglables comme la position du modèle informatique dans un repère lié sans aucun degré de liberté au projecteur 8.

A cet effet, la mémoire 24 comporte un modèle informatique 28 de la surface de projection. Ce modèle définit chaque relief de la surface de projection. Par exemple, il est formé d'une multitude de mailles immédiatement contiguës les unes aux autres, chaque maille définissant une surface ou facette élémentaire de la surface de projection. Par exemple, chaque facette est une face élémentaire plane.

Ce modèle 28 spécifie des emplacements de points virtuels de repère sur la surface de projection. Ces points virtuels de repère sont quelques points parmi l'ensemble des points formant la surface de projection. Chaque point virtuel indique l'emplacement d'un point réel correspondant de repère sur la surface de la projection. Ici, la position de chaque point virtuel sur le modèle 28 est identique à la position du point réel correspondant sur la surface de projection. Le modèle 28 associe à chaque point virtuel un identifiant qui permet de distinguer ce point virtuel de tous les autres points virtuels du modèle 28. Par exemple, cette identifiant indique sa position telle que « centre de la roue avant droite », « angle inférieur gauche du pare-brise avant », ...etc.

Le calculateur 20 implémente également un module 30 de reconnaissance de forme. Ce module 30 est capable de reconnaître dans une image bidimensionnelle acquise par une caméra, la position des points réels et virtuels de repère. Il est également apte à reconnaître une tache sur l'écran 6 correspondant à un doigt en appui sur la face extérieure 12.

A cet effet, des descriptions 32 de chaque forme à reconnaître sont enregistrées dans la mémoire 24. Ici, les descriptions 32 comprennent notamment une description des points réels de repère, des points virtuels de repère et des taches correspondant à un doigt en appui sur la face 12. En effet, lorsqu'un spectateur appuie sur la face 12 cela forme une ombre globalement ovale visible à partir de la face 11. Cette ombre est ici appelée tache.

Ces descriptions des motifs à reconnaître peuvent être construites ou apprises. Par exemple, la description peut contenir le diamètre prédéterminé de chaque point réel de repère ainsi qu'une plage de hauteur vraisemblable pour chacun de ces points de repère.

Les points virtuels projetés sur la surface de projection peuvent prendre différentes formes. Par exemple, il peut s'agir de points de couleur dont le diamètre est prédéterminé. Dans ce cas là, la description 32 de ces points virtuels projetés comporte le diamètre de chaque point ainsi que sa couleur caractéristique. Les points virtuels de repère peuvent également être un motif particulier de l'image projetée. Dans ce cas, la description 32 comporte les caractéristiques permettant de reconnaître ce motif particulier dans une image bidimensionnelle. A titre d'illustration, le point virtuel peut être le centre d'une roue. Dans ce cas, la description 32 peut donner le diamètre de chaque roue et chaque couleur.

Dans un autre mode de réalisation, ces descriptions 32 sont apprises. Cet apprentissage consiste par exemple à enregistrer et à reconnaître une image de chaque point de repère et de la tache correspondant à un doigt.

Le module 30 est également apte à apparierchaque point réel au point virtuel correspondant dans les images acquises en utilisant le modèle 28.

Enfin, le système 2 comprend un instrument de mesure de la distance entre les points réels de repère et les points virtuels de repère projetés sur la surface de projection. Ici, l'instrument comporte une caméra 34 et le module 32 de reconnaissance de forme. La caméra 34 acquière une image de la face intérieure 11 contenant l'ensemble des points réels de repère. Cette caméra est placée du côté de la face intérieure 11. Elle est raccordée au calculateur 20 pour transmettre les images acquises au module 30 de reconnaissance de forme.

La fabrication, le réglage et l'utilisation du système 2 vont maintenant être décrits plus détail en référence au procédé de la figure 3.

Lors d'une étape 50, le modèle informatique 28 de la surface 11 de projection est réalisé. Lors de cette étape 50, les points virtuels de repère sont positionnés sur ce modèle 28. Par exemple, le modèle 28 est réalisé à l'aide d'outils classiques de conception assistée par ordinateur (CAO). Ici, le modèle 28 a la forme d'un véhicule automobile. Dans ce cas, les points virtuels de repère sont placés à des points faciles à repérer par traitement d'image. Par exemple, il s'agit du centre des roues avant et arrière, des quatre angles du pare-brise avant et arrière, ...etc.

Une fois le modèle 28 achevé, lors d'une étape 52, celui-ci est mémorisé dans la mémoire 24. Lors de cette étape 52, les descriptions 32 des points réels et virtuels de repère ainsi que la description des taches formées par l'appui d'un doigt sur la face 12 sont également enregistrées dans cette mémoire.

Par exemple, la description 32 concernant les taches formées par l'appui d'un doigt sur la face 12 est ici réalisée par apprentissage. Lors de cet apprentissage, une image contenant une grille est projetée sur la face 11. Puis, une personne vient appuyer dans un ordre prédéterminé sur chaque case de cette grille. Des images de chacune des taches créées à cette occasion sont enregistrées et forment la description des taches. Chaque case ou groupe de cases correspond à une zone tactile particulière. Ainsi, chaque image enregistrée est en plus associée à un identifiant de la zone tactile correspondante. Cet identifiant permet d'identifier une zone tactile particulière parmi l'ensemble des zones tactiles définies sur la surface de projection.

Lors d'une étape 54, on procède à la réalisation de l'écran 6. La surface de projection de cet écran 6 est identique à celle définie par le modèle 28 et les points réels de repère sont placés aux mêmes emplacements que les points virtuels de repère. Ici, l'écran 6 est réalisé par thermoformage. Par exemple, lors d'une opération 56, un moule, par exemple positif, de la surface 11 de projection est réalisé à partir du modèle informatique 28. Ce moule positif comporte des trous d'aspiration aux emplacements des points virtuels de repère.

Lors d'une opération 58, une plaque thermoplastique est appliquée sur le moule positif. Cette plaque, initialement plane, est chauffée pour se ramollir. Ensuite, la plaque ramollie est appliquée sur le moule positif. Pour cela, l'air entre la plaque ramollie et le moule positif est aspiré au travers des trous d'aspiration dans une thermoformeuse.

Par conséquent, la matière de la plaque est aspirée à l'intérieur de chaque trou d'aspiration, ce qui crée une aspérité sur la surface de projection à l'emplacement de chacun de ces trous. Ces aspérités forment les points réels de repère sur la surface de projection tels que les points 15 à 17 représentés sur la figure 2.

Enfin, lors d'une opération 60, la plaque thermoformée est démoulée puis rendue translucide. Par exemple, la plaque est rendue translucide par sablage ou dépôt d'une peinture blanche sur la surface de projection. L'écran 6 peut également être rendu translucide par dépôt d'une peinture contenant des billes d'argent.

Une fois l'écran 6 réalisé, lors d'une étape 62, celui-ci est placé à un emplacement connu par rapport au projecteur 8 et à la caméra 34. La fabrication du système 2 s'achève.

Une phase 70 de réglage de ce système 2 débute alors. Lors d'une étape 72, la caméra 34 acquiert une image de la surface de projection en absence d'image projetée sur cette surface par le projecteur 8. L'image acquise est transmise au calculateur 20.

Lors d'une étape 74, l'image transmise est traitée par le module 30 de reconnaissance de forme. Lors de cette étape 74, ce module 30 identifie dans l'image acquise les points réels de repère et relève leurs positions. A cet effet, il utilise la description 32 préenregistrée de ces points réels. Ensuite, il associe à chaque point réel identifié le point virtuel correspondant dans le modèle 28. Ici, on exploite le fait qu'il n'existe qu'une seule position du modèle 28 par rapport à la caméra 34, qui permet d'obtenir les mêmes positions que celles relevées dans l'image acquise. Par exemple, on recherche la position du modèle 28 telle que si le modèle 28 était filmé par la caméra 34 dans cette position, alors cela permettrait d'acquérir une image des points virtuels dans laquelle ces points virtuels sont à la même position que les points réels dans l'image acquise. Les points virtuels sont positionnés sur le modèle 28 de manière à ce que cette position soit unique. Cette position permet de relier chaque point réel identifié au point virtuel correspondant et donc à l'identifiant de ce point virtuel. Pour chaque point réel, cet identifiant du point virtuel correspondant ainsi que les coordonnées de ce point réel relevées dans l'image acquise sont ensuite enregistrés dans la mémoire 24.

Lors d'une étape 76, le calculateur construit une image bidimensionnelle, contenant les points virtuels, à partir du modèle 28 et d'une valeur du paramètre de réglage. Le projecteur 8 projette alors l'image bidimensionnelle construite sur la surface de projection. Cette image bidimensionnelle comprend une singularité ou un motif reconnaissable par le module 30 à chaque emplacement d'un point virtuel dans l'image bidimensionnelle. Ainsi, une image de chaque point virtuel est formée sur la surface de projection. Cette image du point virtuel sur la surface de projection est appelée « point virtuel projeté ».

Lors d'une étape 78, la caméra 34 acquiert une image de la surface de projection sur laquelle les points virtuels sont projetées et la transmet au module 30 de reconnaissance de forme.

Lors d'une étape 80, le module 30 identifie dans l'image acquise les points virtuels projetés et relève leur position. Pour cela, il utilise la description préenregistrée 32 des points virtuels de repère. Ensuite, il associe à chaque point virtuel identifié dans l'image acquise, le point virtuel correspondant dans le modèle 28. Par exemple, pour cela il procède de façon similaire à ce que a été décrit lors de l'étape 74 sauf que les points réels sont remplacés par les points virtuels projetés. A l'issue de l'étape 80, pour chaque point virtuel identifié dans l'image acquise, le module 30 enregistre ses coordonnées dans l'image associées à l'identifiant du point virtuel correspondant.

Lors d'une étape 82, le module 30 calcule, pour chaque point réel, une distance dᵢ séparant les coordonnées de ce point réel, relevées lors de l'étape 74, et les coordonnées du point virtuel projeté correspondant, relevées lors de l'étape 80. L'indice i est l'identifiant du point virtuel de repère. Pour identifier les coordonnées relevées du point virtuel projeté correspondant, le module 30 utilise les identifiants de point virtuel associés aux coordonnées des points réel et virtuel lors des étapes 74 et 80.

Ensuite, lors d'une étape 84, un algorithme de correction de la valeur du paramètre de réglage du système 2 est exécuté de manière à trouver une nouvelle valeur permettant de limiter les distances dᵢ.

Par exemple, lors d'une opération 86, le calculateur 20 calcule la somme de toutes les distances dᵢ calculées lors de l'étape 82 pour obtenir un écart total Δ

Lors d'une opération 88, cet écart total Δ est comparé à un seuil prédéterminé S₁.

Si l'écart total Δ est inférieur au seuil S₁ ou si tous les points de repère ont déjà été parcourus par l'algorithme de correction, lors d'une étape 89, le calculateur 20 mémorise la dernière valeur du paramètre de réglage, ce qui achève la phase 70 de réglage. En effet, la valeur mémorisée pour le paramètre de réglage est alors considérée comme étant une valeur correcte ou la meilleure valeur qui puisse être trouvée.

Dans le cas contraire, si l'écart total Δ est supérieur au seuil S₁, la valeur du paramètre de réglage est modifiée.

Ici, lors de la première itération, lors d'une opération 90, l'identifiant du point virtuel pour lequel la distance dᵢ est la plus grande est sélectionné. Ensuite, une nouvelle valeur du paramètre de réglage est calculée pour minimiser cette distance dᵢ particulière puis on retourne à l'étape 76.

Lors des itérations suivantes, lors d'une opération 92, l'écart total Δ calculé est comparé à l'écart total Δp précédemment calculé lors de la précédente itération de l'étape 82.

Si l'écart Δp est inférieur à l'écart Δ, cela signifie que l'écart Δ a augmenté suite à la précédente modification de la valeur du paramètre de réglage. Dans ce cas, lors d'une opération 94, la précédente valeur du paramètre de réglage est annulée.

Ensuite, s'il existe une autre modification possible et plus faible de cette valeur qui minimise la distance dᵢ, lors d'une opération 96, cette nouvelle valeur du paramètre de réglage est retenue et le procédé retourne à l'étape 76.

Si au contraire, toutes les modifications possibles de la valeur du paramètre de réglage permettant de réduire la distance dᵢ ont déjà été essayée, alors, lors d'une opération 98, l'identifiant d'un autre point de repère est sélectionné. Par exemple, l'algorithme sélectionne automatiquement l'identifiant du point de repère qui, après le point de repère précédemment sélectionné, présente la distance dᵢ la plus grande. Lors de cette opération 98, une valeur du paramètre de réglage propre à minimiser cette nouvelle distance dⱼ est calculée puis l'algorithme retourne à l'étape 76.

Si lors de l'opération 92, il est établi que le nouvel écart total Δ est inférieur à l'écart Δp, alors on procède directement à l'opération 96.

Les étapes 76 à 84 sont ainsi réitérées jusqu'à ce qu'une valeur du paramètre de réglage satisfaisante soit trouvée. Avantageusement, un compteur permet d'arrêter la réitération des étapes 76 à 84 si on ne trouve pas de valeur satisfaisante. Une fois cette valeur trouvée, la phase de réglage s'achève et on procède ensuite à une phase 100 d'utilisation du système 2.

Lors de la phase 100, et plus précisément lors d'une étape 102, une image bidimensionnelle est construite puis projetée sur la surface de projection. Cette image bidimensionnelle est construite à partir du modèle 28, par exemple, en définissant et en appliquant des couleurs et/ou des textures pour certaines des facettes de ce modèle puis en projetant le modèle ainsi coloré et/ou texturé sur un plan en fonction de la valeur du paramètre de réglage retenue afin d'obtenir l'image bidimensionnelle à projeter.

Ainsi, l'image projetée s'adapte parfaitement à la surface de projection et permet d'en colorer ou texturer précisément certains de ses reliefs. Par exemple, les parties de l'image correspondant aux roues et au pare-brise avant sont projetées sur les reliefs de la surface de projection conformés, respectivement, en forme de roue et de pare-brise avant.

En parallèle, lors d'une étape 104, la caméra 34 acquiert une image de la surface de projection et la transmet au module 30 de reconnaissance de forme.

Lors d'une étape 106, le module 30 identifie dans l'image acquise s'il existe une tache correspondant à la position d'un doigt sur la face 12 de l'écran 6 et relève les coordonnées de cette tâche dans l'image. Pour cela, il utilise les descriptions 32. Ici, chaque description 32 d'une tâche est associé à un identifiant d'une zone tactile. Ainsi, la description 32 qui a la meilleure corrélation avec l'image acquise de la tâche permet aussi de déterminer l'identifiant de la zone tactile sur laquelle le spectateur a appuyé.

En réponse à l'identification de la présence d'un doigt sur la face 12, lors d'une étape 108, le calculateur 20 commande automatiquement un appareil pour réaliser une action. Typiquement, cette action est fonction de l'identifiant déterminé de la zone tactile. Par exemple, un appui sur le capot avant du véhicule déclenche une action différente d'un appui sur le capot arrière de ce même véhicule. L'action peut être une modification de l'image projetée comme, par exemple, un changement de couleur ou de texture. Si aucune tache n'est identifiée, l'étape 108 n'est pas exécutée.

Les étapes 104 à 108 sont réitérées en boucle.

Si l'écran n'est pas déplaçable ou rarement déplacé, le réglage du système d'affichage n'est pas réitéré à chaque projection. Par exemple, la phase 70 est déclenché manuellement. A l'inverse, dans un autre mode de réalisation, si l'écran 6 est susceptible d'être déplacé au cours de la projection, alors la phase 70 de réglage est réitérée en boucle en parallèle d'une phase 120 d'utilisation (en pointillé sur la figure 3). La phase 100 d'utilisation est alors remplacée par la phase 120. Dans ce cas, les points virtuels sont des singularités de l'image projetée reconnaissable automatiquement par le module 30 telles que le centre des roues.

De nombreux autres modes de réalisation sont possibles. Par exemple, la caméra peut être située du même côté de l'écran que celui où se trouve le spectateur. Dans ce cas, de préférence, les points réels de repère sont formés sur la face extérieure 12 de l'écran 6.

De façon similaire, le projecteur 8 peut être situé du côté de la face 12. Dans ce dernier cas, il ne forme plus avec l'écran 6 un rétroprojecteur mais un simple appareil de projection. Il n'est plus alors nécessaire que la paroi 10 de l'écran 6 soit translucide. Par contre, la face 12 qui forme alors la surface de projection est réalisée de manière à être réfléchissante.

Selon la complexité de la forme de l'écran 6, plusieurs caméras et/ou plusieurs projecteurs sont utilisés pour filmer, respectivement, projeter sur chaque partie de cet écran.

La paroi de l'écran 6 peut être réalisée dans un matériau transparent rendu ensuite translucide par des traitements tels que le sablage, le dépôt d'une peinture blanche ou de microbilles d'argent. La paroi 10 peut aussi être directement réalisée dans un matériau translucide.

L'écran 6 peut être réalisé par des procédés autres que le thermomoulage. Par exemple, il peut être réalisé par usinage d'un bloc de matière. Dans ce cas, le modèle 28 comprend des instructions pour réaliser des usinages constituant les points réels de repère. Il peut aussi être réalisé par formage du verre sur un moule négatif ou positif, dépôt de résine durcissable sur un moule positif ou négatif, moulage par injection de matière, par fluage, par soufflage ou par rotomoulage. Dans chaque cas, le moule comporte des marques spécifiques pour former les points réels de repère aux emplacements prévus par les points virtuels de repère.

Le point réel de repère n'est pas nécessairement introduit volontairement sur l'écran. Par exemple, il peut aussi s'agir d'une singularité de l'écran facilement identifiable comme l'extrémité d'une pointe, le sommet d'une pyramide ou autre. Toutefois, même dans ce cas, le modèle 28 comporte un identifiant du point virtuel correspondant.

Les points réels de repère peuvent aussi être des creux ou des trous formés dans la paroi de l'écran et débouchant sur la surface de projection. Par exemple, le point réel de repère peut avoir la forme d'une croix située à l'emplacement du point virtuel de repère.

Les points de repère peuvent aussi être réalisés par des marques de peinture déposées sur la surface de projection. De préférence, la peinture utilisée est invisible à l'oeil nu et uniquement perceptible par l'intermédiaire de l'instrument de mesure. Par exemple, la peinture est uniquement visible à des longueurs d'onde en dehors du spectre visible.

La mesure de la position des points réels de repère peut être réalisée avec d'autres instruments qu'une caméra. Par exemple, les points réels de repère sont réalisés par des aimants intégrés à la paroi de l'écran 6 exactement à l'emplacement indiqué par les points virtuels de repère. La position des points réels de repère peut alors être obtenue en utilisant un ou plusieurs capteurs triaxes de champ magnétique.

D'autres singularités graphiques qu'un point d'une couleur particulière peuvent être utilisées pour marquer l'emplacement des points virtuels projetés sur la surface de projection. Par exemple, à la place d'un point, une croix ou une autre forme facilement identifiable par un instrument de mesure est utilisée. La singularité marquant la position des points virtuels projetés peut également être fonction de l'image projetée. Par exemple, dans le cas d'une image d'un véhicule automobile, les singularités sont les centres de chaque roue et les quatre angles du pare-brise avant. Dans ce dernier cas, il n'est pas nécessaire d'utiliser une couleur particulière pour marquer ces singularités. Toutefois, même dans ce cas, le modèle 28 comporte un identifiant du point virtuel correspondant.

En variante, l'acquisition de l'image des points réels est réalisée en même temps que l'acquisition de l'image des points virtuels projetés sur la surface de projection.

Le système d'affichage peut comporter d'autres paramètres réglables que l'orientation du modèle informatique par rapport à la ligne de visée du projecteur. Par exemple, en variante, le champ de projection ou la direction de la ligne de visée du projecteur sont des paramètres automatiquement réglables par le calculateur et dont la valeur doit être déterminée lors du réglage.

L'association des points réels identifiés dans l'image acquise et l'identifiant du point virtuel correspondant peut être réalisée différemment. Par exemple, chaque point réel a une forme qui lui est propre et reconnaissable par le module 30. Une table associe chacune de ces formes à un identifiant du point virtuel correspondant. Lorsque le module 30 reconnaît une forme, il détermine l'identifiant du point virtuel à associer à ce point réel à partir de cette table. On peut procéder de la même façon avec les points virtuels projetés.

D'autres algorithmes de correction des paramètres de réglage sont possibles. Par exemple, l'algorithme peut sélectionner le point réel pour lequel on cherche à minimiser la distance dᵢ non pas en fonction de la valeur calculée de cette distance mais, à la place ou en plus, en fonction de la position de ce point réel par rapport aux autres points de repère.

L'instrument pour mesurer la distance dᵢ et celui pour détecter un appui d'un doigt du spectateur sur l'écran peuvent être différents. Par exemple, la caméra 34 est uniquement utilisée pour la mesure de la distance dᵢ tandis qu'une caméra infrarouge est utilisée pour détecter l'appui du doigt du spectateur sur la face 12.

D'autres méthodes sont possibles pour associer la position d'un doigt détecté sur l'écran à un identifiant d'une zone tactile. Par exemple, le modèle 28 peut aussi être utilisé pour identifier la zone tactile sur laquelle le spectateur a appuyé. A cet effet, la position de la tâche par rapport aux points virtuels ou réels peut être utilisée.

Dans une autre variante, la zone tactile sur laquelle vient appuyer le spectateur est identifiée en émettant une onde, par exemple une onde acoustique dans la paroi 10 de l'écran 6 et en mesurant la variation de cette onde en fonction de la zone tactile sur laquelle repose le doigt.

## Revendications

1. Procédé d'affichage d'une image sur une surface de projection en relief à l'aide d'un système de projection, ce procédé comportant :
- le réglage (70) du système de projection pour obtenir et mémoriser une valeur d'au moins un paramètre de réglage de ce système,
- la définition (102 ; 120) de couleurs et/ou de textures pour des facettes élémentaires d'un modèle informatique définissant la surface de projection en relief, et
- la construction (102 ; 120) d'une image à projeter en fonction du modèle informatique, des couleurs et/ou textures définies pour les facettes élémentaires, et de la valeur mémorisée pour le paramètre de réglage,
- la projection (102 ; 120) de l'image construite sur la surface de projection d'un écran tridimensionnel réalisé dans un matériau translucide, cet écran comportant une face avant sur laquelle s'affiche l'image projetée et une face arrière formant la surface de projection,
**caractérisé en ce que :**
- le réglage (70) du système de projection comporte la mesure automatique (72, 74, 78, 80, 82), à l'aide d'une caméra fixe, de la distance séparant des points virtuels de repère projetés sur la surface de projection, de points réels de repère réalisés sur l'écran tridimensionnel
- le procédé comporte également:
• l'acquisition (104) par la même caméra fixe que celle utilisée lors du réglage du système de projection, d'une image de la face arrière de l'écran tridimensionnel,
• l'identification (106) de la position d'un doigt en contact avec la face avant de l'écran tridimensionnel dans l'image acquise, et
• la commande (108) d'un appareil en fonction de la position identifiée du doigt.

2. Procédé selon la revendication 1, dans lequel le réglage du système de projection comporte :
1) la mémorisation (52) d'un modèle informatique définissant la surface de projection en relief et les emplacements d'au moins quatre points virtuels de repère sur cette surface de projection,
2) la réalisation (54) de l'écran tridimensionnel comportant la surface de projection définie par le modèle informatique et les points réels de repère fixés, sans aucun degré de liberté, à la surface de projection aux emplacements des points virtuels de repère définis par le modèle informatique,
3) la construction (76) d'une image contenant les points virtuels de repère à partir du modèle informatique et d'une valeur choisie pour ledit au moins un paramètre de réglage du système de projection,
4) la projection (76) de l'image construite sur la surface de projection, par un projecteur,
5) ladite mesure automatique (72, 74, 78, 80, 82) de la distance séparant, sur la surface de projection, les points virtuels de repère projetés des points réels de repère,
6) si cette distance mesurée est supérieure à un seuil prédéterminé, la modification (90, 96, 98) automatique de la valeur du paramètre de réglage pour réduire cette distance et la réitération des étapes 3) à 6) précédentes, et
7) si la distance mesurée est inférieure au seuil prédéterminé, la mémorisation (89) de la valeur du paramètre de réglage pour son utilisation lors d'une projection ultérieure d'une image sur la surface de projection.

3. Procédé selon la revendication 1 ou 2, dans lequel le paramètre de réglage est la position du modèle informatique dans un repère lié sans aucun degré de liberté au projecteur.

4. Procédé selon l'une quelconque des revendications précédentes, dans lequel la mesure de la distance comporte :
- l'acquisition (72) de l'image des points réels de repère à l'aide de la caméra fixe et l'identification de ces points réels de repère dans l'image,
- l'acquisition (78) de l'image des points virtuels de repère projetés sur la surface de projection à l'aide de la même caméra fixe et l'identification de ces points virtuels de repère dans l'image,
- l'association automatique (82) de chaque point réel identifié dans l'image acquise à un point virtuel correspondant identifié dans l'image acquise, et
- le calcul (82) de la distance séparant les points réels des points virtuels correspondants à partir des coordonnées de ces points réels dans l'image acquise et des coordonnées des points virtuels dans l'image acquise.

5. Procédé selon l'une quelconque des revendications précédentes, dans lequel le procédé comprend la réitération des étapes suivantes :
- la construction (120) de l'image en fonction du modèle informatique, des couleurs et/ou textures définies pour les facettes élémentaires, et de la valeur mémorisée pour le paramètre de réglage, l'image construite comprenant aussi les points virtuels de repère,
- la projection (120) de l'image construite, et
- le réglage (70) du système de projection à partir de l'image construite projetée,
de manière à adapter automatiquement l'image projetée à un déplacement de l'écran tridimensionnel.

6. Procédé selon l'une quelconque des revendications 1 à 4, dans lequel l'image construite (102) en fonction du modèle informatique, des couleurs et/ou textures définies pour les facettes élémentaires, et de la valeur mémorisée pour le paramètre de réglage, est dépourvue des points virtuels de repère.

7. Procédé selon l'une quelconque des revendications précédentes, dans lequel le procédé comprend:
- la réalisation (56) d'un moule à partir du modèle informatique de la surface de projection, ce moule comportant des trous d'aspiration à chaque emplacement d'un point virtuel de repère,
- l'application (58) d'une plaque en matériau thermoformable sur ce moule, cette application impliquant l'aspiration par les trous d'aspiration de poches d'air présentes entre la plaque et le moule, et
- la formation (58) des points réels de repère par aspiration du matériau thermoformable à l'intérieur des trous d'aspiration.

8. Support (24) d'enregistrement d'informations, **caractérisé en ce qu'il** comporte des instructions pour l'exécution d'un procédé conforme à l'une quelconque des revendications précédentes, lorsque ces instructions sont exécutées par un calculateur électronique.

9. Système d'affichage d'une image tridimensionnelle, ce système comportant :
- un projecteur (8) apte à projeter une image sur une surface de projection en relief,
- une mémoire électronique (24) contenant un modèle informatique définissant la surface de projection en relief et les emplacements d'au moins quatre points virtuels de repère sur cette surface de projection,
- un écran tridimensionnel (6) réalisé dans un matériau translucide, cet écran comportant :
• une face avant sur laquelle s'affiche l'image projetée et une face arrière formant la surface de projection, et
• des points réels de repère (15-17) fixés, sans aucun degré de liberté, à la surface de projection aux emplacements des points virtuels de repère définis par le modèle informatique,
- un calculateur électronique (20) programmé :
• pour construire une image contenant les points virtuels de repère à partir du modèle informatique et d'une valeur choisie pour au moins un paramètre de réglable du système de projection, et
• pour commander la projection de l'image construite sur la surface de projection, par le projecteur
**caractérisé en ce que** :
- le système comporte un instrument électronique de mesure (30, 34) de la distance séparant, sur la surface de projection, les points virtuels de repère projetés des points réels de repère, cet instrument comportant un caméra fixe (34), et
- le calculateur est également programmé pour :
• régler automatiquement la valeur du paramètre de réglage du système de projection en fonction de la distance mesurée par l'instrument électronique, et
• acquérir par la même caméra fixe que celle utilisée lors du réglage du système de projection, une image de la face arrière de l'écran tridimensionnel,
• identifier la position d'un doigt en contact avec la face avant de l'écran tridimensionnel dans l'image acquise, et
• commander un appareil en fonction de la position identifiée du doigt.

10. Système selon la revendication 9, dans lequel le calculateur est programmé :
• pour, si la distance mesurée est supérieure à un seuil prédéterminé, modifier automatiquement la valeur du paramètre de réglage pour réduire cette distance, et
• si la distance mesurée est inférieure au seuil prédéterminé, pour mémoriser la valeur du paramètre de réglage pour son utilisation lors d'une projection ultérieure d'une image sur la surface de projection par le système de projection.

11. Système selon la revendication 9 ou 10, dans lequel les points réels de repère (15-17) sont des cavités ou des aspérités dont la profondeur ou la hauteur est supérieure à 0,5mm ou 1mm.

## Patentansprüche

1. Verfahren zum Anzeigen eines Bildes auf einer dreidimensionalen Projektionsfläche mittels eines Projektionssystems, wobei dieses Verfahren Folgendes aufweist:
- das Regeln (70) des Projektionssystems, um einen Wert von mindestens einem Regelungsparameter dieses Systems zu erhalten und zu speichern,
- das Definieren (102; 120) von Farben und/oder Texturen für Elementarfacetten eines informatischen Modells, das die dreidimensionale Projektionsfläche definiert, und
- das Aufbauen (102; 120) eines zu projizierenden Bildes in Abhängigkeit von dem informatischen Modell, den für die Elementarfacetten definierten Farben und/oder Texturen und dem für den Regelungsparameter gespeicherten Wert,
- das Projizieren (102; 120) des aufgebauten Bildes auf die Projektionsfläche eines dreidimensionalen Bildschirms, der aus einem durchsichtigen Material hergestellt ist, wobei dieser Bildschirm eine Vorderseite, auf der das projizierte Bild angezeigt wird, und eine Rückseite aufweist, die die Projektionsfläche bildet,
**dadurch gekennzeichnet, dass**:
- das Regeln (70) des Projektionssystems das automatische Messen (72, 74, 78, 80, 82) des Abstands, der virtuelle Bezugspunkte, die auf die Projektionsfläche projiziert werden, von realen Bezugspunkten trennt, die auf dem dreidimensionalen Bildschirm ausgeführt sind, mittels einer festen Kamera aufweist
- wobei das Verfahren auch Folgendes aufweist:
• das Erfassen (104) eines Bildes der Rückseite des dreidimensionalen Bildschirms durch dieselbe feste Kamera wie diejenige, die beim Regeln des Projektionssystems verwendet wird,
• das Identifizieren (106) der Position eines Fingers, der mit der Vorderseite des dreidimensionalen Bildschirms in Berührung ist, im erfassten Bild, und
• das Steuern (108) einer Vorrichtung in Abhängigkeit von der identifizierten Position des Fingers.

2. Verfahren nach Anspruch 1, wobei das Regeln des Projektionssystems Folgendes aufweist:
1) das Speichern (52) eines informatischen Modells, das die dreidimensionale Projektionsfläche und die Standorte von mindestens vier virtuellen Bezugspunkten auf dieser Projektionsfläche definiert,
2) das Ausführen (54) des dreidimensionalen Bildschirms, der die durch das informatische Modell und die festen realen Bezugspunkte definierte Projektionsfläche aufweist, ohne einen einzigen Freiheitsgrad, an der Projektionsfläche an den Standorten der durch das informatische Modell definierten virtuellen Bezugspunkte,
3) das Aufbauen (76) eines Bildes, das die virtuellen Bezugspunkte enthält, ausgehend von dem informatischen Modell und einem für den mindestens einen Regelungsparameter des Projektionssystems ausgewählten Wert,
4) das Projizieren (76) des auf der Projektionsfläche aufgebauten Bildes durch einen Projektor,
5) das automatische Messen (72, 74, 78, 80, 82) des Abstands, der die projizierten virtuellen Bezugspunkte von den realen Bezugspunkten auf der Projektionsfläche trennt,
6) wenn dieser gemessene Abstand größer als ein vorbestimmter Schwellenwert ist, das automatische Ändern (90, 96, 98) des Werts des Regelungsparameters zum Verringern dieses Abstands und das Wiederholen der vorhergehenden Schritte 3) bis 6) und
7) wenn der gemessene Abstand kleiner als der vorbestimmte Schwellenwert ist, das Speichern (89) des Werts des Regelungsparameters für seine Verwendung bei einer späteren Projektion eines Bildes auf die Projektionsfläche.

3. Verfahren nach Anspruch 1 oder 2, wobei der Regelungsparameter die Position des informatischen Modells in einem Bezugssystem ist, das ohne einen einzigen Freiheitsgrad mit dem Projektor verbunden ist.

4. Verfahren nach einem der vorhergehenden Ansprüche, wobei das Messen des Abstands Folgendes aufweist:
- das Erfassen (72) des Bildes der realen Bezugspunkte mittels der festen Kamera und das Identifizieren dieser realen Bezugspunkte in dem Bild,
- das Erfassen (78) des Bildes der virtuellen Bezugspunkte, die auf die Projektionsfläche projiziert werden, mittels derselben festen Kamera und das Identifizieren dieser virtuellen Bezugspunkte in dem Bild,
- das automatische Verbinden (82) von jedem in dem erfassten Bild identifizierten realen Punkt mit einem entsprechenden in dem erfassten Bild identifizierten virtuellen Punkt, und
- das Berechnen (82) des Abstands, der die realen Punkte von den entsprechenden virtuellen Punkten trennt, ausgehend von den Koordinaten dieser realen Punkte in dem erfassten Bild und den Koordinaten der virtuellen Punkte in dem erfassten Bild.

5. Verfahren nach einem der vorhergehenden Ansprüche, wobei das Verfahren das Wiederholen der folgenden Schritte aufweist:
- das Aufbauen (120) des Bildes in Abhängigkeit von dem informatischen Modell, den für die Elementarfacetten definierten Farben und/oder Texturen und dem für den Regelungsparameter gespeicherten Wert, wobei das aufgebaute Bild auch die virtuellen Bezugspunkte aufweist,
- das Projizieren (120) des aufgebauten Bildes und
- das Regeln (70) des Projektionssystems ausgehend von dem projizierten aufgebauten Bild, derart, dass das projizierte Bild automatisch an eine Verschiebung des dreidimensionalen Bildschirms angepasst wird.

6. Verfahren nach einem der Ansprüche 1 bis 4, wobei das in Abhängigkeit von dem informatischen Modell, den für die Elementarfacetten definierten Farben und/oder Texturen und dem für den Regelungsparameter gespeicherten Wert aufgebaute Bild (102) keine virtuellen Bezugspunkte aufweist.

7. Verfahren nach einem der vorhergehenden Ansprüche, wobei das Verfahren Folgendes aufweist:
- das Ausführen (56) einer Form ausgehend von dem informatischen Modell der Projektionsfläche, wobei diese Form Ansauglöcher an jedem Standort eines virtuellen Bezugspunkts aufweist,
- das Aufbringen (58) einer Platte aus thermoformbarem Material auf diese Form, wobei dieses Aufbringen das Ansaugen von Lufteinschlüssen, die zwischen der Platte und der Form vorhanden sind, durch die Ansauglöcher beinhaltet, und
- das Bilden (58) der realen Bezugspunkte durch Ansaugen des thermoformbaren Materials in das Innere der Ansauglöcher.

8. Träger (24) zum Aufzeichnen von Informationen, **dadurch gekennzeichnet, dass** er Befehle für die Ausführung eines Verfahrens nach einem der vorhergehenden Ansprüche aufweist, wenn diese Befehle durch einen elektronischen Rechner ausgeführt werden.

9. System zum Anzeigen eines dreidimensionalen Bildes, wobei dieses System Folgendes aufweist:
- einen Projektor (8), der geeignet ist, ein Bild auf eine dreidimensionale Projektionsfläche zu projizieren,
- einen elektronischen Speicher (24), der ein informatisches Modell enthält, das die dreidimensionale Projektionsfläche und die Standorte von mindestens vier virtuellen Bezugspunkten auf dieser Projektionsfläche definiert,
- einen dreidimensionalen Bildschirm (6), der aus einem durchsichtigen Material hergestellt ist, wobei dieser Bildschirm Folgendes aufweist:
• eine Vorderseite, auf der das projizierte Bild angezeigt wird, und eine Rückseite, die die Projektionsfläche bildet, und
• feste reale Bezugspunkte (15 bis 17) ohne einen einzigen Freiheitsgrad auf der Projektionsfläche an den Standorten der virtuellen Bezugspunkte, die durch das informatische Modell definiert werden,
- einen elektronischen Rechner (20), der für Folgendes programmiert ist:
• zum Aufbauen eines Bildes, das die virtuellen Bezugspunkte enthält, ausgehend von dem informatischen Modell und einem für mindestens einen Regelungsparameter des Projektionssystems ausgewählten Wert, und
• zum Steuern der Projektion des aufgebauten Bildes auf die Projektionsfläche durch den Projektor
**dadurch gekennzeichnet, dass**:
- das System ein elektronisches Instrument (30, 34) zur Messung des Abstands aufweist, der die projizierten virtuellen Bezugspunkte auf der Projektionsfläche von den realen Bezugspunkten trennt, wobei dieses Instrument eine feste Kamera (34) aufweist, und
- wobei der Rechner auch für Folgendes programmiert ist:
• automatisches Regeln des Werts des Regelungsparameters des Projektionssystems in Abhängigkeit von dem durch das elektronische Instrument gemessenen Abstand, und
• Erfassen eines Bildes der Rückseite des dreidimensionalen Bildschirms durch dieselbe feste Kamera wie diejenige, die beim Regeln des Projektionssystems verwendet wird,
• Identifizieren der Position eines Fingers, der mit der Vorderseite des dreidimensionalen Bildschirms in Berührung ist, in dem erfassten Bild, und
• Steuern einer Vorrichtung in Abhängigkeit von der identifizierten Position des Fingers.

10. System nach Anspruch 9, wobei der Rechner für Folgendes programmiert ist:
• wenn der gemessene Abstand größer als ein vorbestimmter Schwellenwert ist, automatisches Ändern des Werts des Regelungsparameters zum Verringern dieses Abstands, und
• wenn der gemessene Abstand kleiner als der vorbestimmte Schwellenwert ist, Speichern des Werts des Regelungsparameters für seine Verwendung bei einem späteren Projizieren eines Bildes auf der Projektionsfläche durch das Projektionssystem.

11. System nach Anspruch 9 oder 10, wobei die realen Bezugspunkte (15 bis 17) Hohlräume oder Unebenheiten sind, deren Tiefe oder Höhe größer als 0,5 mm oder 1 mm ist.

## Claims

1. Method for displaying an image on a relief projection surface using a projection system, this method comprising:
- the adjustment (70) of the projection system to obtain and store a value of at least one adjustment parameter of this system,
- the definition (102; 120) of colours and/or of textures for elementary facets of a computer model defining the relief projection surface, and
- the construction (102; 120) of an image to be projected as a function of the computer model, of the colours and/or textures defined for the elementary facets, and of the value stored for the adjustment parameter,
- the projection (102; 120) of the constructed image onto the projection surface of a three-dimensional screen made of a translucent material, this screen comprising a front face on which the projected image is displayed and a rear face forming the projection surface,
**characterized in that**:
- the adjustment (70) of the projection system comprises the automatic measurement (72, 74, 78, 80, 82), using a fixed camera, of the distance separating virtual reference frame points projected onto the projection surface, from real reference frame points produced on the three-dimensional screen,
- the method also comprises:
• the acquisition (104), by the same fixed camera as that used when adjusting the projection system, of an image of the rear face of the three-dimensional screen,
• the identification (106) of the position of a finger in contact with the front face of the three-dimensional screen in the acquired image, and
• the control (108) of an apparatus as a function of the identified position of the finger.

2. Method according to Claim 1, in which the adjustment of the projection system comprises:
1) the storage (52) of a computer model defining the relief projection surface and the positions of at least four virtual reference frame points on this projection surface,
2) the production (54) of the three-dimensional screen comprising the projection surface defined by the computer model and the real reference frame points fixed, with no degree of freedom, on the projection surface at positions of the virtual reference frame points defined by the computer model,
3) the construction (76) of an image containing the virtual reference frame points from the computer model and from a value chosen for said at least one adjustment parameter of the projection system,
4) the projection (76) of the constructed image onto the projection surface, by a projector,
5) said automatic measurement (72, 74, 78, 80, 82) of the distance separating, on the projection surface, the projected virtual reference frame points from the real reference frame points,
6) if said measured distance is greater than a predetermined threshold, the automatic modification (90, 96, 98) of the value of the adjustment parameter to reduce this distance and the reiteration of the preceding steps 3) to 6), and
7) if the measured distance is less than the predetermined threshold, the storage (89) of the value of the adjustment parameter for its use in a subsequent projection of an image onto the projection surface.

3. Method according to Claim 1 or 2, in which the adjustment parameter is the position of the computer model in a reference frame linked with no degree of freedom to the projector.

4. Method according to any one of the preceding claims, in which the measurement of the distance comprises:
- the acquisition (72) of the image of the real reference frame points using the fixed camera and the identification of these real reference frame points in the image,
- the acquisition (78) of the image of the virtual reference frame points projected onto the projection surface using the same fixed camera and the identification of these virtual reference frame points in the image,
- the automatic association (82) of each real point identified in the acquired image with a corresponding virtual point identified in the acquired image, and
- the computation (82) of the distance separating the real points from the corresponding virtual points on the basis of the coordinates of these real points in the acquired image and of the coordinates of the virtual points in the acquired image.

5. Method according to any one of the preceding claims, in which the method comprises the reiteration of the following steps:
- the construction (120) of the image as a function of the computer model, of the colours and/or textures defined for the elementary facets, and of the value stored for the adjustment parameter, the constructed image also comprising the virtual reference frame points,
- the projection (120) of the constructed image, and
- the adjustment (70) of the projection system from the projected constructed image, so as to automatically adapt the projected image to a displacement of the three-dimensional screen.

6. Method according to any one of Claims 1 to 4, in which the image (102) constructed as a function of the computer model, of the colours and/or textures defined for the elementary facets, and of the value stored for the adjustment parameter, has no virtual reference frame points.

7. Method according to any one of the preceding claims, in which the method comprises:
- the production (56) of a mould from the computer model of the projection surface, this mould comprising suction holes at each position of a virtual reference frame point,
- the application (58) of a plate made of thermoformable material to this mould, this application involving the suction through the suction holes of air pockets present between the plate and the mould, and
- the formation (58) of the real reference frame points by suction of the thermoformable material into the suction holes.

8. Computer storage medium (24), **characterized in that** it comprises instructions for the execution of a method according to any one of the preceding claims, when the instructions are executed by an electronic computer.

9. System for displaying a three-dimensional image, this system comprising:
- a projector (8) suitable for projecting an image onto a relief projection surface,
- an electronic memory (24) containing a computer model defining the relief projection surface and the positions of at least four virtual reference frame points on this projection surface,
- a three-dimensional screen (6) made of a translucent material, this screen comprising:
• a front face on which the projected image is displayed and a rear face forming the projection surface, and
• real reference frame points (15-17) that are fixed, with no degree of freedom, on the projection surface at positions of the virtual reference frame points defined by the computer model,
- an electronic computer (20) programmed:
• to construct an image containing the virtual reference frame points from the computer model and from a value chosen for at least one adjustable parameter of the projection system, and
• to control the projection of the constructed image onto the projection surface, by the projector,
**characterized in that**:
- the system comprises an electronic instrument (30, 34) for measuring the distance separating, on the projection surface, the projected virtual reference frame points from the real reference frame points, this instrument comprising a fixed camera (34), and
- the computer is also programmed to:
• automatically set the value of the adjustment parameter of the projection system as a function of the distance measured by the electronic instrument, and
• acquire, by the same fixed camera as that used in the adjustment of the projection system, an image of the rear face of the three-dimensional screen,
• identify the position of a finger in contact with the front face of the three-dimensional screen in the acquired image, and
• control an apparatus as a function of the identified position of the finger.

10. System according to Claim 9, in which the computer is programmed:
• to, if the measured distance is greater than a predetermined threshold, automatically modify the value of the adjustment parameter to reduce this distance, and
• if the measured distance is less than the predetermined threshold, to store the value of the adjustment parameter for its use in a subsequent projection of an image onto the projection surface by the projection system.

11. System according to Claim 9 or 10, in which the real reference frame points (15-17) are cavities or protuberances, the depth or the height of which is greater than 0.5 mm or 1 mm.
